# FASCICULE DE BREVET EUROPEEN

(11) **EP 3 495 037 B1**
(45) Date de publication et mention de la délivrance du brevet: **26.06.2024**
(21) Numéro de dépôt: 18206427.9
(22) Date de dépôt: 15.11.2018
(51) Int. Cl.: B01J 4/00

(54) **SYSTÈME POUR LA DISTRIBUTION D'UNE PHASE LIQUIDE ET/OU GAZEUSE DANS UNE ENCEINTE RÉACTIONNELLE**
SYSTEM ZUR VERTEILUNG EINER FLÜSSIGEN UND/ODER GASFÖRMIGEN PHASE IN EINER REAKTIONSKAMMER
SYSTEM FOR THE DISTRIBUTION OF A LIQUID AND/OR GASEOUS PHASE IN A REACTION CHAMBER

(30) Priorité: 11.12.2017 FR 1761897
(43) Date de publication de la demande: 12.06.2019
(73) Titulaire: AXENS, 92508 Rueil-Malmaison Cedex (FR)
(72) Inventeur: NIDERKORN, Etienne, 92500 RUEIL-MALMAISON (FR); DELTEIL, Jauffray, 95570 Moisselles (FR); VINEL, Daniel-Jean, 78130 LES MUREAUX (FR)
(74) Mandataire: IFP Energies nouvelles

(56) Documents cités:
- EP-A2- 0 212 974
- WO-A1-2015/042276
- CN-U- 201 618 444
- US-A- 5 232 673
- US-A1- 2012 230 895

## Description

La présente invention concerne le domaine du raffinage pétrolier, plus précisément le domaine de la distribution d'une phase liquide et/ou gazeuse dans une enceinte réactionnelle.

Plus particulièrement, la présente invention peut concerner un réacteur biphasique dont l'un des réactifs est injecté en phase gaz ou liquide au sein d'un milieu quelconque (gazeux, liquide ou solide ou leur mélange), de préférence un milieu solide ou un milieu liquide encrassant, comme par exemple dans le cas de réacteurs de catalyse homogène, mis en oeuvre pour des procédés de production d'alphaoléfines par polymérisation limitée d'éthylène (dimérisation, trimérisation ou tétramérisation).

En effet, la polymérisation limitée peut conduire à la formation de sous-produits en faible quantité (tels que des polyéthylènes), qui peuvent s'accumuler dans le milieu réactionnel, se déposer sur l'ensemble des internes, et provoquer en particulier l'encrassement du distributeur. Le distributeur doit être régulièrement enlevé pour lavage puis remis en place.

A titre d'exemple, on peut considérer le procédé AlphaButol ^{®}, pour lequel le distributeur injecte dans un milieu liquide réactionnel (essentiellement composé de Butene-1 à son point de bulle) soit de l'éthylène seul, soit un hydrocarbure liquide aux conditions réactionnelles (par exemple, Butene-1, iso Pentane, Hexane, cyclohexane), soit une phase mixte composée d'éthylène (gaz) et d'un hydrocarbure liquide aux conditions réactionnelles (par exemple, Butene-1, iso Pentane, Hexane, cyclohexane). Il s'agit donc d'un distributeur gaz, ou liquide ou gaz plus liquide. Le distributeur utilisé pour ce procédé nécessite d'être fréquemment nettoyé, ce qui oblige de mettre à l'arrêt l'unité lors de la dépose/réinstallation du distributeur. Il apparaît donc nécessaire de faciliter autant que faire se peut cette intervention, pour en limiter la durée et la perte de production inhérente. De plus, dans le cas du procédé AlphaButol, le milieu réactionnel liquide est parfaitement agité au moyen d'une ou plusieurs boucles de repompage (tourne-en-rond) dont le débit est maximisé. Le distributeur de par sa nature (injection principalement de gaz dans du liquide) et traversant de plus ce très fort débit de tourne-en-rond subit de fortes contraintes mécaniques et vibratoires. Il convient donc qu'un distributeur pour la distribution d'une phase liquide et/ou gazeuse, au moins pour ce type de procédés où les contraintes mécaniques et vibratoires sont fortes, soit parfaitement maintenu dans sa position de service.

Par ailleurs, pour les procédés de catalyse homogène, l'oxygène et l'humidité de l'air ambiant sont des poisons connus. Il est donc primordial de limiter autant que faire se peut les entrées d'air vers les réacteurs, et a fortiori les ouvertures vers l'extérieur (telles que des trous d'homme, des trous de main). Il est donc important de limiter ces entrées vers l'extérieur.

### Etat de la technique

On connait les documents suivants :
- WO 2015/042276 A1, qui concerne une buse de pulvérisation pour le craquage catalytique fluidisé ;
- US 2012/230895 A1, qui concerne un dispositif et un procédé pour le traitement de gaz naturel acide ;
- US 5232673 A, qui concerne un injecteur de flux de fluide blindé pour un réacteur à lit de particules.
- CN 201618444 U, qui concerne un distributeur de liquide dans une enceinte réactionnelle.

On connaît par exemple la demande US 2012/0321529 qui décrit un distributeur sous la forme de plaques circulaires comprenant des trous. Dans ce document, le distributeur est fixé de manière permanente à la paroi de l'enceinte réactionnelle. En effet, compte-tenu de la réaction mise en jeu (oxydation de l'ammoniac en phase gaz), il n'est pas nécessaire de devoir nettoyer ce distributeur.

On connaît également la demande WO 2017/003643 qui décrit des distributeurs de gaz et de liquide séparés et situés l'un au-dessus de l'autre. Dans ce document, les distributeurs sont fixés de manière permanente via une conduite principale qui traverse la paroi du réacteur et débouche sur des tubulures perforées. En effet, la réaction mise en jeu (injection d'oxygène gazeux dans un liquide contenant du cyclohexylbenzèene et un catalyseur organique soluble (imide)) ne nécessite pas de nettoyage du distributeur.

On connaît encore le document US 4,198,210 qui décrit un distributeur constitué de tubes revêtus à l'intérieur d'un matériau réfractaire, soudés ensemble ainsi qu'à l'enceinte réactionnelle. Les tubes sont renforcés afin de résister à l'érosion qui intervient lors de la gazéification du charbon fluidisé dans une phase liquide. Ce type de distributeur traverse la paroi du réacteur et est fixé de façon permanente à cette paroi, car il n'est pas nécessaire de nettoyer ce type de distributeur.

On connait aussi du document US 2005/0209351 un distributeur de gaz dans une phase à la fois liquide et solide (dite phase « slurry » en anglais), comprenant des anneaux ou des tiges comprenant une multitude de perforations et éventuellement munis de buses pour injecter le gaz. Dans ce cas, afin d'éviter un colmatage des perforations aménagées dans le distributeur, une plaque perforée est placée au-dessus dudit distributeur dont les trous sont suffisamment petits pour éviter le passage de grains de catalyseur susceptibles de colmater les trous. Il n'est donc pas nécessaire de pouvoir enlever le distributeur de l'enceinte réactionnelle à laquelle il est fixé.

Ainsi, aucun des documents selon l'art antérieur ne décrit un distributeur pouvant être facilement enlevé du réacteur pour être nettoyé, puis facilement remis en position de service, et ce, sans avoir à intervenir à l'intérieur du réacteur. Or cela est particulièrement avantageux dans le cas où le distributeur est en fonctionnement dans un milieu encrassant. Le distributeur selon l'invention pallie à ces inconvénients. Le distributeur selon l'invention est utilisable tant pour injecter du gaz que du liquide, ou un mélange des deux.

### Le système selon l'invention

La présente invention concerne un système pour la distribution d'une phase liquide et/ou gazeuse dans une enceinte réactionnelle, ladite enceinte comprenant au moins une entrée pour une injection de ladite phase. Le système selon l'invention comprend :
- un distributeur pour distribuer ladite phase, comprenant au moins un tube, ledit tube comprenant une pluralité de perforations ;
- des moyens pour une fixation démontable dudit distributeur lorsqu'il est agencé dans l'entrée de ladite enceinte ;
- des moyens de support dudit distributeur en au moins un point de ladite enceinte situé en regard de ladite entrée de ladite enceinte ;
- des moyens pour le guidage dudit distributeur lors de son insertion et/ou de son retrait dans ladite enceinte, la section de l'ensemble formé au moins par ledit distributeur et lesdits moyens de guidage agencés sur ledit distributeur étant inférieure à la section de l'entrée de ladite enceinte ;
- lesdits moyens de guidage permettant de faciliter le centrage dudit distributeur par rapport à son axe final et son positionnement lors de son installation dans ladite enceinte réactionnelle.
De plus, selon l'invention, la section d'au moins ledit distributeur est inférieure à la section de ladite entrée.

Selon une mise en oeuvre de l'invention, lesdits moyens pour une fixation démontable peuvent consister en un ensemble pour solidariser de manière réversible au moins l'une des extrémités dudit distributeur avec ladite entrée de ladite enceinte.

Avantageusement, ledit ensemble peut comprendre au moins une bride, un joint d'étanchéité et au moins un assemblage vissé.

Avantageusement, lesdits moyens de support peuvent comprendre un rail destiné à être fixé le long dudit tube dudit distributeur, deux plaques destinées à être fixées verticalement sur une paroi de ladite enceinte de manière à accueillir et maintenir ledit rail, la section de l'ensemble formé au moins par ledit distributeur et ledit rail étant inférieure à la section de ladite entrée de ladite enceinte.

Alternativement ou de manière combinée, lesdits moyens de support peuvent comprendre une gouttière et un support pour ladite gouttière, ladite gouttière et ledit support étant destinés à être fixés à ladite enceinte réactionnelle de manière à permettre le coulissement et le maintien dudit distributeur dans l'axe de ladite entrée.

Selon une autre conception de l'invention, lesdits moyens de support peuvent comprendre une pièce en forme d'arc de cercle destinée à être fixée à la paroi de ladite enceinte réactionnelle et à permettre le maintien dudit distributeur dans l'axe de ladite entrée.

Avantageusement, lesdits moyens de guidage peuvent comprendre une pluralité d'ailettes distribuées selon une direction longitudinale sur ledit tube dudit distributeur de manière à assurer le centrage dudit distributeur lors de son insertion et/ou de son retrait dans l'entrée de ladite enceinte.

En outre, ledit système peut comprendre des moyens d'installation dudit distributeur dans ladite enceinte, lesdits moyens d'installation étant destinés à être disposés à l'extérieur de ladite enceinte.

Selon une première conception de l'invention, lesdits moyens d'installation dudit distributeur peuvent comprendre une plateforme mobile, dont le tablier est à hauteur de ladite entrée de ladite enceinte.

Selon une deuxième conception de l'invention, lesdits moyens d'installation peuvent comprendre un rail, un système de poulie et un contrepoids.

L'invention concerne également une enceinte réactionnelle comprenant au moins un système pour la distribution d'une phase liquide et/ou gazeuse tel que décrit ci-dessus.

L'invention concerne en outre une utilisation d'une enceinte réactionnelle comprenant au moins un système pour la distribution d'une phase liquide et/ou gazeuse tel que décrit ci-dessus pour un procédé de raffinage pétrolier.

Selon une mise en oeuvre de l'invention, ledit procédé de raffinage est un procédé de polymérisation limitée.

D'autres caractéristiques et avantages du système selon l'invention, apparaîtront à la lecture de la description ci-après d'exemples non limitatifs de réalisations, en se référant aux Figures annexées et décrites ci-après.

### Présentation succincte des figures

- La figure 1 illustre un exemple d'enceinte réactionnelle muni d'un système de distribution d'une phase liquide et/ou gazeuse selon l'invention.
- La figure 2.1 correspond à une vue transversale d'un système pour la distribution pour une phase selon une mise en oeuvre de l'invention, lorsque le distributeur est en position de service dans une enceinte réactionnelle.
- La figure 2.2 correspond à une vue de face du système présenté à la figure 2.1, la vue étant prise du côté de l'entrée de l'enceinte réactionnelle.
- La figure 2.3 correspond à une vue de face du système présenté à la figure 2.1, la vue étant prise du côté du point en regard de l'entrée de l'enceinte réactionnelle.
- La figure 2.4 correspond à une vue de dessus partielle du système présenté à la figure 2.1, la vue étant prise du côté du point en regard de l'entrée de l'enceinte réactionnelle.
- La figure 3.1 correspond à une vue transversale d'un système pour la distribution pour une phase selon une autre mise en oeuvre de l'invention.
- La figure 3.2 correspond à une vue de face du système présenté à la figure 3.1, la vue étant prise du côté de l'entrée de l'enceinte réactionnelle, lorsque le distributeur inséré dans la bride de la capacité.
- La figure 3.3 correspond à une vue de face du système présenté à la figure 3.1, la vue étant prise du côté du point en regard de l'entrée de l'enceinte réactionnelle.
- La figure 3.4 correspond à une vue de dessus partielle du système présenté à la figure 3.1, la vue étant prise du côté du point en regard de l'entrée de l'enceinte réactionnelle.

### Description détaillée du système

De façon générale, l'un des objets de l'invention concerne un système pour la distribution d'une phase liquide et/ou gazeuse dans une enceinte réactionnelle, comprenant un distributeur pour distribuer la phase considérée. De manière classique, l'enceinte réactionnelle, aussi appelée capacité, dans laquelle doit être disposé le distributeur selon l'invention comprend au moins une entrée pour la phase devant être distribuée par le distributeur selon l'invention. Le distributeur selon l'invention est destiné à coopérer avec l'entrée agencée dans l'enceinte réactionnelle pour l'injection de la phase liquide et/ou gazeuse. De manière classique, l'entrée de l'enceinte réactionnelle pour l'injection de la phase gaz ou liquide devant être distribuée est sous la forme d'une tubulure placée au niveau d'une paroi, de préférence verticale, de l'enceinte réactionnelle. De manière classique, l'enceinte réactionnelle peut avoir une forme cylindrique, avec un fond semi-hémisphérique, hémisphérique ou plat.

Selon l'invention, le système pour la distribution de la phase liquide et/ou gazeuse comprend au moins un distributeur sous la forme d'un tube et des moyens pour une fixation démontable du distributeur lorsqu'il est disposé dans l'enceinte réactionnelle. Selon l'invention, les moyens pour une fixation démontable du distributeur permettent le maintien et la fixation du distributeur en position de service dans l'enceinte réactionnelle, tout en permettant de le démonter, notamment pour sa maintenance. Selon l'invention, la section du distributeur au moins est inférieure à la section de l'entrée agencée dans l'enceinte pour injecter la phase considérée. De cette manière il est possible d'insérer et/ou retirer le distributeur de l'enceinte réactionnelle en le faisant passer par l'entrée de l'enceinte réactionnelle pour l'injection de la phase. De cette manière et en combinaison avec les moyens de fixation démontable du distributeur sur l'enceinte réactionnelle, il est possible d'insérer et/ou retirer le distributeur selon l'invention par l'entrée agencée dans l'enceinte réactionnelle pour l'injection de la phase liquide et/ou gazeuse. Ainsi, la dépose et l'installation du distributeur dans l'enceinte réactionnelle ne nécessite pas de trou d'homme ni de trou de main.

Selon une mise en oeuvre de l'invention, le diamètre du tube du distributeur selon l'invention a une dimension de préférence comprise entre 30 et 600 mm, de manière plus préférée entre 50mm et 400mm, et, selon l'invention ce diamètre est inférieur à celui de la tubulure d'entrée de l'enceinte réactionnelle. De cette manière, notamment au moment de la dépose du distributeur lorsqu'il est encrassé par des sous-produits de polymérisation tels que des polyéthylènes formant une couche sur le distributeur, on diminue les risques que ces sous-produits se détachent du distributeur lors de son passage par la tubulure d'entrée de l'enceinte réactionnelle et tombent au fond de l'enceinte réactionnelle, contribuant à l'encrassement de l'enceinte réactionnelle.

Selon une autre mise en oeuvre de l'invention, le distributeur est un distributeur multi-branches. Selon une variante de cette mise en oeuvre, le distributeur comprend un tube principal se divisant en un faisceau de tubes secondaires, perforés, de plus petits diamètres que le tube principal. Selon une autre variante de cette mise en oeuvre, le distributeur comprend un tube principal et une pluralité de tubes secondaires, perforés, de plus petits diamètres que le tube principal, agencés selon un angle non nul sur la face extérieure du tube principal. Selon l'invention, la plus grande dimension de cet ensemble formé par le tube principal et par ses tubes secondaires ne peut excéder le diamètre de la tubulure d'entrée, de manière à pouvoir insérer et/ou retirer le distributeur en le faisant passer par cette entrée.

Selon l'invention, le tube du distributeur comporte une pluralité de perforations, ces perforations étant destinées au passage de la phase à injecter dans l'enceinte réactionnelle par le distributeur. Selon une mise en oeuvre de l'invention, les perforations sont placées de manière aléatoire sur le tube du distributeur. Selon une autre mise en oeuvre de l'invention, les perforations sont distribuées le long d'une hélice courant le long du tube du distributeur. Selon une autre alternative de mise en oeuvre de l'invention, les perforations sont distribuées le long d'une pluralité de cercles placés de manière équidistante le long du tube du distributeur. Selon un mode préféré de mise en oeuvre de l'invention, les perforations peuvent être agencées le long d'une ou plusieurs lignes selon une direction longitudinale du tube, et les perforations peuvent être dirigées vers le bas, vers les côtés ou vers le haut du distributeur. Selon une autre mise en oeuvre préférée de l'invention, les perforations sont distribuées le long des intersections avec le tube de deux plans passant par l'axe du distributeur et formant un angle de 60° entre eux. Avantageusement, un marquage extérieur au distributeur permet d'indiquer la position des perforations.

Selon une mise en oeuvre de l'invention, le tube du distributeur est muni à une de ses extrémités d'un embout démontable (par exemple par boulonnage, vissage, ou encore clipsage), dont la section est inférieure au diamètre de l'entrée pour l'injection de la phase agencée dans l'enceinte réactionnelle. De préférence, l'embout démontable a une forme polygonale, hexagonale, triangulaire ou carré. De cette manière, il est possible d'installer et/ou déposer le distributeur dans l'enceinte réactionnelle en passant par la tubulure d'entrée de l'enceinte réactionnelle, mais aussi de limiter d'éventuels points d'accroche pour les polymères sous-produits et formant une couche sur le tube du distributeur.

Selon une première variante de mise en oeuvre de l'invention, les moyens pour une fixation démontable du distributeur consistent en un ensemble pour solidariser de manière réversible au moins l'une des extrémités du distributeur avec la tubulure d'entrée de l'enceinte réactionnelle. Selon une mise en oeuvre de l'invention, cet ensemble pour la fixation du distributeur à l'entrée de l'enceinte réactionnelle comprend au moins une bride, un joint d'étanchéité et au moins un assemblage vissé. Selon cette première variante de réalisation de l'invention, l'autre extrémité du distributeur ne comporte pas de moyens pour la fixation démontable du distributeur. Une telle variante peut être utilisée dans des cas où les contraintes mécaniques et vibratoires sont limitées (par exemple pour des distributeurs de petite taille).

Selon une deuxième variante de mise en oeuvre de l'invention, le système selon l'invention comprend, en sus des moyens de fixation démontable tels que décrit dans la première variante de réalisation ci-dessus (c'est-à-dire des moyens de fixation démontable destinés à fixer de manière réversible une seule extrémité du tube du distributeur), des moyens de support du distributeur, les moyens de support étant destinés à maintenir le distributeur dans sa position de service. Une telle variante de mise en oeuvre de l'invention est pertinente dans le cas où il est important de maintenir le distributeur dans son axe, par exemple dans le cas de contraintes mécaniques et vibratoires modérées à fortes. Une telle variante de mise en oeuvre de l'invention est pertinente dans le cas où il est nécessaire de maintenir le distributeur dans son axe, par exemple dans le cas de contraintes mécaniques et vibratoires modérées à fortes. Une telle variante de mise en oeuvre de l'invention permet de ne pas nécessiter des moyens de fixation démontable aux deux extrémités du tube, tout en maintenant le tube en service.

Selon une variante de l'invention, les moyens de support du distributeur consistent en un élément destiné à être fixé en un point de l'enceinte réactionnelle situé en regard de l'entrée de l'enceinte réactionnelle. De manière préférée, les moyens de support du distributeur sont fixés en un point de la paroi de l'enceinte réactionnelle, et peuvent consister en tout moyen connu par l'homme du métier pour supporter l'extrémité du distributeur, comme par exemple, un court arc de cercle, ou bien deux morceaux de plaques disposées en « V », ou bien une plaque support en T. Préférentiellement, les moyens de support sont formés en métal. Selon une mise en oeuvre de l'invention, les moyens de support sont soudés directement en un point de la paroi de la capacité. Selon une autre mise en oeuvre de l'invention, les moyens de support consistent en un court arc de cercle destiné à être placé dans une tubulure du distributeur agencée en regard de la tubulure d'entrée destinée à l'injection de la phase devant être distribuée. Pour ce mode mise en oeuvre particulier, l'arc de cercle a une forme épousant celle de cette deuxième tubulure et permet le maintien du distributeur dans un axe passant par l'entrée de l'enceinte réactionnelle.

Selon un exemple de mode de réalisation, les moyens de support du distributeur selon l'invention comprennent au moins un rail destiné à être fixé le long d'un tube du distributeur, et au moins deux plaques destinées à être fixées verticalement sur la paroi de l'enceinte réactionnelle et espacées de manière à accueillir et maintenir le rail. Un tel mode de mise en oeuvre de l'invention est pertinent dans le cas de contraintes mécaniques et vibratoires modérées, ne nécessitant pas un maintien en place fort du distributeur en un point en regard de l'entrée. L'ensemble tube plus rail doit nécessairement avoir une section inférieure à la section de la tubulure d'entrée de l'enceinte réactionnelle, de manière à ce que, lors des opérations d'installation et/ou de dépose, cet ensemble puisse être inséré et/ou retiré en le faisant passer par l'entrée agencée dans l'enceinte. Le rail peut être fixé de manière démontable à un tube du distributeur, de manière à faciliter son nettoyage et celui du tube auquel il est fixé. Alternativement, le rail peut être fixé au tube par soudure. Selon un mode de réalisation de l'invention selon lequel le distributeur est un distributeur multi-branches se présentant sous la forme d'un faisceau de tubes secondaires, les moyens de support selon l'invention peuvent comprendre une pluralité de rails destinés à soutenir au moins un sous-ensemble des tubes secondaires du distributeur. Selon un mode de réalisation de l'invention selon lequel le distributeur est un distributeur multi-branches se présentant sous la forme d'un tube principal comportant sur sa face externe une pluralité de tubes secondaires formant un angle non nul avec le tube principal, les moyens de support selon l'invention peuvent comprendre un rail destiné à soutenir le tube principal du distributeur.

Selon un exemple de mode de réalisation, les moyens de support du distributeur selon l'invention comprennent une gouttière et au moins un support pour cette gouttière, de manière à ce que le tube du distributeur repose sur cette gouttière lorsqu'il est en position de service dans l'enceinte réactionnelle. Un tel mode de mise en oeuvre de l'invention est pertinent dans le cas de contraintes mécaniques et vibratoires modérées à fortes, nécessitant un soutien tout le long du distributeur. De plus, la gouttière permet en outre de guider le tube, par coulissement, lors de son installation et/ou son retrait dans l'enceinte réactionnelle. Selon une mise en oeuvre de l'invention, une extrémité de la gouttière se situe dans la tubulure d'entrée, son autre extrémité reposant sur un support de la gouttière fixé en un point de la paroi de l'enceinte réactionnelle en regard de l'entrée. Selon une mise en oeuvre de l'invention, la gouttière est fixée au support de gouttière par des moyens de vissage.

Selon un autre exemple de mode de réalisation, on combine les deux précédents exemples de mode de réalisation. Selon cet autre exemple de mode de réalisation, les moyens de support peuvent par exemple comprendre un rail destiné à être fixé le long du tube du distributeur ainsi qu'une gouttière dont la section permet que l'ensemble tube plus rail puisse reposer et coulisser dans la gouttière. Selon cet autre exemple de mode de réalisation, la gouttière peut être en une ou une deux pièces.

Selon l'invention, le distributeur comprend en outre des moyens de guidage, destinés à faciliter le centrage du distributeur par rapport à son axe final et son positionnement lors de son installation dans l'enceinte réactionnelle. Ainsi, lorsque les moyens de fixation démontable comprennent des brides tels que décrit ci-dessus, les moyens de guidage selon l'invention peuvent notamment viser à placer la bride du distributeur parfaitement dans l'axe de la bride de l'enceinte réactionnelle, ceci pour une parfaite étanchéité du montage après fixation, de manière préférée par boulonnage. Selon une mise en oeuvre de l'invention, lorsque combinés aux deuxième et troisième variantes décrites ci-dessus, les moyens de guidage permettent en outre de positionner facilement le distributeur dans son point de maintien final, situé en au moins un point en regard de l'entrée de l'enceinte pour l'injection de la phase.

Selon un premier mode de réalisation de l'invention pouvant être combiné avec l'une quelconque des variantes décrites ci-dessus, les moyens de guidage comprennent une pluralité d'ailettes positionnées sur le distributeur, la section de l'ensemble constitué par les ailettes plus le tube du distributeur devant être inférieure à la section de la tubulure d'entrée de l'enceinte réactionnelle. De manière préférée, au moins deux ailettes sont agencées sur le tube du distributeur selon l'invention, de manière plus préférée entre 2 et 5 ailettes, et de manière encore plus préférée, entre 2 et 8 ailettes. Avantageusement, et dans le cas où les moyens de support selon l'invention comprennent une gouttière et un unique support de gouttière, la gouttière comporte également au moins une ailette dans sa partie destinée à être placée dans la tubulure d'entrée, de manière à contribuer au centrage du distributeur le long de son axe final.

Selon une variante de mise en oeuvre de l'invention, pouvant être combinée indifféremment avec les autres variantes de mise en oeuvre de l'invention, le système pour la distribution d'une phase selon l'invention comprend des moyens d'installation du distributeur dans l'enceinte réactionnelle, destinés à être disposés à l'extérieur de l'enceinte.

Selon une première mise en oeuvre de cette variante de l'invention, les moyens d'installation du distributeur comprennent une plateforme mobile, dont le tablier est à hauteur de la tubulure d'entrée de l'enceinte. Avantageusement, le tablier comprend un système de roulement à billes, permettant de faire glisser le distributeur dans la tubulure.

Selon une deuxième mise en oeuvre de cette variante de l'invention, les moyens d'installation du distributeur comprennent un rail externe, un contre-poids et un système de poulie ou tout équivalent. Selon cette mise en oeuvre, le distributeur est emboîté le long du rail externe et le système de poulie plus contrepoids permet de maintenir l'ensemble à la hauteur de l'entrée de l'enceinte réactionnelle.

De plus, la présente invention concerne une enceinte réactionnelle comportant au moins un distributeur selon l'une quelconque des combinaisons de variantes décrites précédemment.

Le distributeur peut être agencé dans le fond de l'enceinte pour introduire un fluide dans l'enceinte.

Selon un aspect de l'invention, l'enceinte peut comporter une pluralité de distributeurs tubulaires. Ces distributeurs peuvent être agencés parallèlement les uns aux autres à une même hauteur de l'enceinte, ou à une hauteur différente. Cette configuration permet d'améliorer l'homogénéité de la distribution dans l'enceinte.

En outre, l'invention concerne l'utilisation d'une telle enceinte pour un procédé de raffinage pétrolier, notamment un procédé de polymérisation limitée.

En particulier, l'enceinte peut être utilisée pour un procédé AlphaButol ^{®}, pour lequel le distributeur injecte dans un milieu liquide réactionnel (essentiellement composé de Butene-1 à son point de bulle) soit de l'éthylène seul, soit un hydrocarbure liquide aux conditions réactionnelles (par exemple, Butene-1, iso Pentane, Hexane, cyclohexane), soit une phase mixte composée d'éthylène (gaz) et d'un hydrocarbure liquide aux conditions réactionnelles (par exemple, Butene-1, iso Pentane, Hexane, cyclohexane). Le distributeur selon l'invention permet, grâce à sa conception, un démontage et un montage simples et donc un nettoyage et/ou une maintenance facilités.

### Exemple de réalisation

Les caractéristiques et avantages du système selon l'invention apparaîtront plus clairement à la lecture de l'exemple de réalisation décrit ci-après.

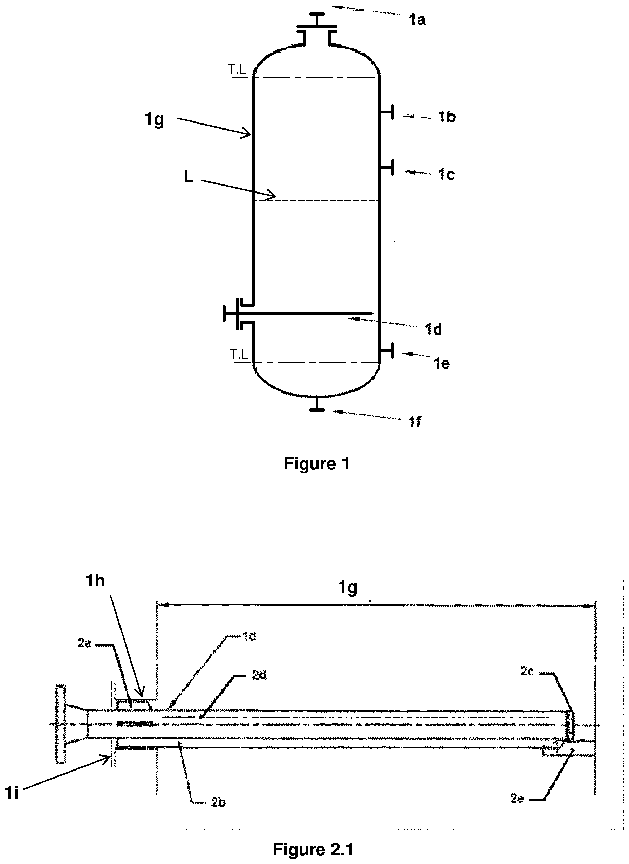

La figure 1 représente un arrangement non limitatif d'une enceinte réactionnelle 1g, correspondant à titre illustratif, à un réacteur de polymérisation limitée, muni d'un distributeur 1d selon l'invention. Cette enceinte réactionnelle comporte également une sortie d'évacuation 1a d'une phase gazeuse (présentée ici de façon optionnelle sur un trou d'homme), une sortie d'évacuation 1b pour l' effluent gazeux ou mixte, une entrée liquide 1c (qui peut être munie d'un distributeur spécifique), le niveau de liquide dans l'enceinte étant représenté par la ligne en pointillés L, une sortie liquide 1e (qui peut aussi être située sous la ligne de soudure du fond de la capacité (sous la « TL », TL signifiant « Tangent Line» en anglais, ou ligne tangente en français) et peut être substituée par le drain 1f (qui peut servir de sortie liquide et être muni d'un anti-vortex).

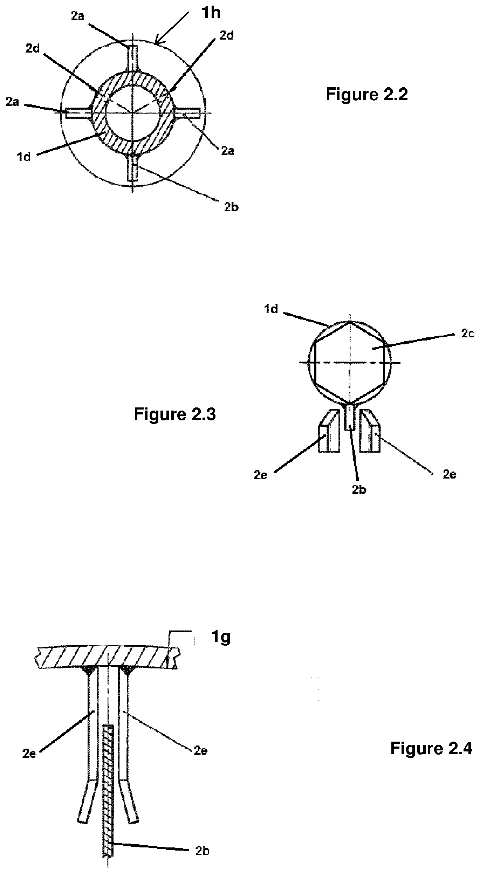

La figure 2.1 détaille un exemple non limitatif d'un système pour la distribution d'une phase selon l'invention, comprenant un distributeur 1d sous la forme d'un tube, muni de perforations 2d, des moyens de fixation démontable 1i, des moyens de support sous la forme d'un rail 2b et de deux plaques 2e de fixation et de maintien du rail 2b, des moyens de guidage sous la forme d'ailettes 2a, un embout démontable 2c de forme hexagonale. Sur cette figure, le système pour la distribution d'une phase selon l'invention est en position de service, dans l'enceinte réactionnelle 1g comprenant une entrée pour la phase 1h sous la forme d'une tubulure. Selon cette conception de l'invention, le rail 2b correspond à une simple tige courant le long du distributeur. Le rail support 2b coopère avec deux pièces 2e directement soudées à la paroi de la capacité et agencées de manière à ce que le rail 2b s'encastre parfaitement, tel que présenté aux figures 2.3 et 2.4. Selon cette conception de l'invention, et tel que détaillé en particulier sur les figures 2.1 et 2.2, les ailettes 2a et le rail 2b permettent le centrage du tube dans l'entrée pour la phase 1h. Lors de son installation, le distributeur selon cette conception de l'invention est dès lors facilement positionnable par simple poussée et est ensuite maintenu dans sa position.

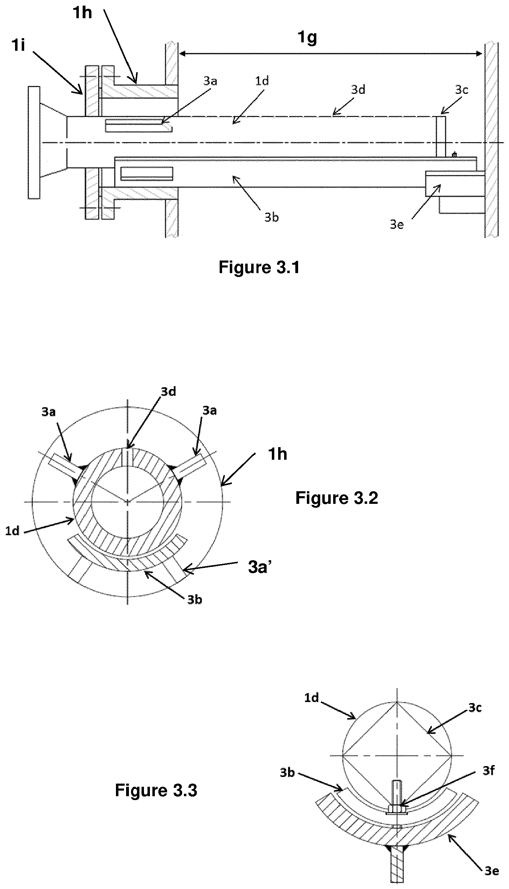

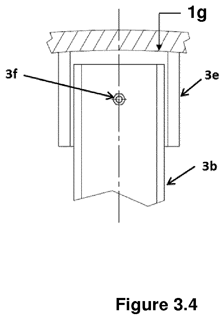

La figure 3.1 présente un mode réalisation de la deuxième variante de mise en oeuvre de l'invention, comprenant un distributeur 1d sous la forme d'un tube muni de perforations 3d, des moyens de support sous la forme d'une gouttière 3b et d'un support de la gouttière 3e, des moyens de guidage sous la forme d'ailettes 3a, et un embout démontable 3c à tête carrée. Les figures 3.3 et 3.4 détaillent plus particulièrement la fixation possible de cette gouttière sur un point d'accroche à la paroi de l'enceinte réactionnelle 1g. Selon cette conception, les perforations 3d du tube du distributeur sont également espacées, dirigées vers le haut et distribuées le long d'une unique ligne. Par ailleurs, selon cette conception particulière de l'invention, le support de gouttière est en forme de « T », soudé à la paroi de l'enceinte réactionnelle 1g, et est muni d'une tige filetée pour servir d'accroche à la gouttière elle-même percée, un boulonnage 3f sur la tige filetée complétant l'accrochage de la gouttière. Selon cette conception de l'invention, le tube est muni de deux ailettes 3a agencées sur la partie du tube située dans la tubulure d'entrée 1h lorsque le distributeur est mis en service. Selon cette conception de l'invention, et comme montré en figure 3.2, la gouttière est elle-même munie de deux ailettes 3a' agencées sur la partie de la gouttière située dans la tubulure d'entrée 1h lorsque le distributeur est mis en service. La section de l'ensemble formé par le tube du distributeur plus les ailettes plus la gouttière est inférieure à la section de la tubulure d'entrée 1h de l'enceinte réactionnelle 1g. En combinaison avec les moyens de fixation démontable selon l'invention comprenant ici au moins une bride d'étanchéité 1i, le distributeur peut donc être inséré et retiré de l'enceinte par l'entrée de l'enceinte réactionnelle, en vue de sa maintenance ou encore de son nettoyage. Cette installation ou dépose du distributeur se fait par coulissement le long de la gouttière, les ailettes 3a et 3a' contribuant au centrage du distributeur le long de son axe final.

## Revendications

1. Système pour une enceinte réactionnelle permettant la distribution d'une phase liquide et/ou gazeuse dans ladite enceinte réactionnelle (1g), ladite enceinte (1g) comprenant au moins une entrée (1h) pour une injection de ladite phase, ledit système comprenant :
- un distributeur (1d) pour distribuer ladite phase, comprenant au moins un tube, ledit tube comprenant une pluralité de perforations (2d, 3d) ;
- des moyens pour une fixation démontable (1i) dudit distributeur lorsqu'il est agencé dans l'entrée (1h) de ladite enceinte (1g),
la section d'au moins ledit distributeur (1d) étant inférieure à la section de ladite entrée (1h), ledit système comprenant en outre des moyens de support (2b, 2e, 3d, 3e) dudit distributeur en au moins un point de ladite enceinte (1g) situé en regard de ladite entrée de ladite enceinte, **caractérisé en ce que** ledit système comprend en outre des moyens pour le guidage (2a, 3a) dudit distributeur (1d) lors de son insertion et/ou de son retrait dans ladite enceinte (1g), la section de l'ensemble formé au moins par ledit distributeur (1d) et lesdits moyens de guidage (2a, 3a) agencés sur ledit distributeur (1d) étant inférieure à la section de l'entrée (1h) de ladite enceinte (1g), et lesdits moyens de guidage permettant de faciliter le centrage dudit distributeur par rapport à son axe final et son positionnement lors de son installation dans ladite enceinte réactionnelle.

2. Système selon la revendication 1, dans lequel lesdits moyens pour une fixation démontable (1i) consistent en un ensemble pour solidariser de manière réversible au moins l'une des extrémités dudit distributeur (1d) avec ladite entrée (1h) de ladite enceinte (1g).

3. Système selon la revendication 2, dans lequel ledit ensemble comprend au moins une bride, un joint d'étanchéité et au moins un assemblage vissé.

4. Système selon l'une des revendications précédentes, dans lequel lesdits moyens de support (2b, 2e, 3d, 3e) comprennent un rail (2b) destiné à être fixé le long dudit tube dudit distributeur (1d), deux plaques (2e) destinées à être fixées verticalement sur une paroi de ladite enceinte (1g) de manière à accueillir et maintenir ledit rail (2b), la section de l'ensemble formé au moins par ledit distributeur (1d) et ledit rail (2b) étant inférieure à la section de ladite entrée (1h) de ladite enceinte (1g).

5. Système selon l'une des revendications 1 à 3, dans lequel lesdits moyens de support (2b, 2e, 3d, 3e) comprennent une gouttière (3b) et un support (3e) pour ladite gouttière (3b), ladite gouttière (3b) et ledit support (3e) étant destinés à être fixés à ladite enceinte réactionnelle (1g) de manière à permettre le coulissement et le maintien dudit distributeur (1d) dans l'axe de ladite entrée (1h).

6. Système selon l'une des revendications 1 à 3, dans lequel lesdits moyens de support (2b, 2e, 3d, 3e) comprennent une pièce en forme d'arc de cercle destinée à être fixée à la paroi de ladite enceinte réactionnelle (1g) et à permettre le maintien dudit distributeur (1d) dans l'axe de ladite entrée (1h).

7. Système selon l'une des revendications précédentes, dans lequel lesdits moyens de guidage comprennent une pluralité d'ailettes (2a, 3a) distribuées selon une direction longitudinale sur ledit tube dudit distributeur (1d) de manière à assurer le centrage dudit distributeur (1d) lors de son insertion et/ou de son retrait dans l'entrée (1h) de ladite enceinte (1g).

8. Système selon l'une des revendications précédentes, dans lequel ledit système comprend des moyens d'installation dudit distributeur (1d) dans ladite enceinte (1g), lesdits moyens d'installation étant destinés à être disposés à l'extérieur de ladite enceinte (1g).

9. Système selon la revendication 8, dans lequel lesdits moyens d'installation dudit distributeur (1d) comprennent une plateforme mobile, dont le tablier est à hauteur de ladite entrée de ladite enceinte.

10. Système selon la revendication 8, dans lequel lesdits moyens d'installation comprennent un rail, un système de poulie et un contrepoids.

11. Enceinte réactionnelle (1g) comprenant au moins un système pour une enceinte réactionnelle permettant la distribution d'une phase liquide et/ou gazeuse selon l'une quelconque des revendications 1 à 10.

12. Utilisation d'une enceinte réactionnelle comprenant au moins un système pour une enceinte réactionnelle permettant la distribution d'une phase liquide et/ou gazeuse selon l'une quelconque des revendications 1 à 10 pour un procédé de raffinage pétrolier.

13. Utilisation selon la revendication 12, dans lequel ledit procédé de raffinage est un procédé de polymérisation limitée.

## Patentansprüche

1. System für eine Reaktionskammer, welches die Verteilung einer flüssigen und/oder gasförmigen Phase in der Reaktionskammer (1g) ermöglicht, wobei diese Kammer (1g) mindestens einen Eingang (1h) für eine Einspritzung der Phase umfasst, wobei das System umfasst:
- einen Verteiler (1d) zum Verteilen der Phase, der mindestens ein Rohr umfasst, wobei das Rohr eine Vielzahl von Durchbohrungen (2d, 3d) umfasst;
- Mittel zur lösbaren Befestigung (1i) des Verteilers, wenn er im Eingang (1h) der Kammer (1g) angeordnet ist, wobei der Querschnitt wenigstens des Verteilers (1d) kleiner als der Querschnitt des Eingangs (1h) ist, wobei das System außerdem Mittel zur Halterung (2b, 2e, 3d, 3e) des Verteilers an mindestens einem Punkt der Kammer (1g) umfasst, der sich gegenüber dem Eingang der Kammer befindet, **dadurch gekennzeichnet, dass** das System außerdem Mittel zur Führung (2a, 3a) des Verteilers (1d) bei seinem Einsetzen und/oder seinem Herausziehen in die bzw. aus der Kammer (1g) umfasst, wobei der Querschnitt der Anordnung, die mindestens von dem Verteiler (1d) und den am Verteiler (1d) angeordneten Führungsmitteln (2a, 3a) gebildet wird, kleiner als der Querschnitt des Eingangs (1h) der Kammer (1g) ist und die Führungsmittel ermöglichen, die Zentrierung des Verteilers bezüglich seiner endgültigen Achse und seine Positionierung bei seinem Einbau in die Reaktionskammer zu erleichtern.

2. System nach Anspruch 1, wobei die Mittel zur lösbaren Befestigung (1i) aus einer Anordnung zum reversiblen Befestigen mindestens eines der Enden des Verteilers (1d) am Eingang (1h) der Kammer (1g) bestehen.

3. System nach Anspruch 2, wobei die Anordnung mindestens einen Flansch, eine Dichtung und mindestens eine Schraubverbindung umfasst.

4. System nach einem der vorhergehenden Ansprüche, wobei die Halterungsmittel (2b, 2e, 3d, 3e) eine Schiene (2b), die dazu bestimmt ist, entlang des Rohres des Verteilers (1d) befestigt zu werden, und zwei Platten, die dazu bestimmt sind, vertikal an einer Wand der Kammer (1g) so befestigt zu werden, dass sie die Schiene (2b) aufnehmen und halten, umfassen, wobei der Querschnitt der Anordnung, die mindestens von dem Verteiler (1d) und der Schiene (2b) gebildet wird, kleiner als der Querschnitt des Eingangs (1h) der Kammer (1g) ist.

5. System nach einem der Ansprüche 1 bis 3, wobei die Halterungsmittel (2b, 2e, 3d, 3e) eine Rinne (3b) und einen Halter (3e) für die Rinne (3b) umfassen, wobei die Rinne (3b) und der Halter (3e) dazu bestimmt sind, an der Reaktionskammer (1g) so befestigt zu werden, dass sie das Gleiten und das Halten des Verteilers (1d) in der Achse des Eingangs (1h) ermöglichen.

6. System nach einem der Ansprüche 1 bis 3, wobei die Halterungsmittel (2b, 2e, 3d, 3e) ein kreisbogenförmiges Teil umfassen, das dazu bestimmt ist, an der Wand der Reaktionskammer (1g) befestigt zu werden und das Halten des Verteilers (1d) in der Achse des Eingangs (1h) zu ermöglichen.

7. System nach einem der vorhergehenden Ansprüche, wobei die Führungsmittel mehrere Flügel (2a, 3a) umfassen, die entlang einer Längsrichtung am Rohr des Verteilers (1d) so verteilt sind, dass sie die die Zentrierung des Verteilers (1d) bei seinem Einsetzen und/oder seinem Herausziehen in die bzw. aus dem Eingang (1h) der Kammer (1g) sicherstellen.

8. System nach einem der vorhergehenden Ansprüche, wobei das System Mittel zum Einbau des Verteilers (1d) in die Kammer (1g) umfasst, wobei die Mittel zum Einbau dazu bestimmt sind, außerhalb der Kammer (1g) angeordnet zu werden.

9. System nach Anspruch 8, wobei die Mittel zum Einbau des Verteilers (1d) eine bewegliche Plattform umfassen, deren Tisch sich auf der Höhe des Eingangs der Kammer befindet.

10. System nach Anspruch 8, wobei die Mittel zum Einbau eine Schiene, ein Rollensystem und ein Gegengewicht umfassen.

11. Reaktionskammer (1g), welche mindestens ein System für eine Reaktionskammer, das die Verteilung einer flüssigen und/oder gasförmigen Phase ermöglicht, nach einem der Ansprüche 1 bis 10 umfasst.

12. Verwendung einer Reaktionskammer, welche mindestens ein System für eine Reaktionskammer, das die Verteilung einer flüssigen und/oder gasförmigen Phase ermöglicht, nach einem der Ansprüche 1 bis 10 umfasst, für ein Erdölraffinationsverfahren.

13. Verwendung nach Anspruch 12, wobei das Raffinationsverfahren ein Verfahren der begrenzten Polymerisation ist.

## Claims

1. System for a reaction chamber allowing the distribution of a liquid and/or gaseous phase into said reaction chamber (1g), said chamber (1g) comprising at least one inlet (1h) for an injection of said phase, said system comprising:
- a distributor (1d) for distributing said phase, comprising at least one tube, said tube comprising a plurality of perforations (2d, 3d);
- means (1i) for removable fastening of said distributor when it is arranged in the inlet (1h) of said chamber (1g),
the cross section of at least said distributor (1d) being smaller than the cross section of said inlet (1h), said system furthermore comprising means (2b, 2e, 3d, 3e) for supporting said distributor at at least one point of said chamber (1g) that is situated facing said inlet of said chamber, **characterized in that** said system furthermore comprises means (2a, 3a) for guiding said distributor (1d) during its insertion into and/or its removal from said chamber (1g), the cross section of the assembly formed at least by said distributor (1d) and said guiding means (2a, 3a) arranged on said distributor (1d) being smaller than the cross section of the inlet (1h) of said chamber (1g), and said guiding means making it easier to centre said distributor with respect to its final axis and to position it during its installation in said reaction chamber.

2. System according to Claim 1, wherein said means (1i) for removable fastening consist of an assembly for reversibly securing at least one of the ends of said distributor (1d) to said inlet (1h) of said chamber (1g).

3. System according to Claim 2, wherein said assembly comprises at least one flange, a seal and at least one screwed joint.

4. System according to one of the preceding claims, wherein said supporting means (2b, 2e, 3d, 3e) comprise a rail (2b) intended to be fastened along said tube of said distributor (1d), two plates (2e) intended to be fastened vertically to a wall of said chamber (1g) so as to receive and hold said rail (2b), the cross section of the assembly formed at least by said distributor (1d) and said rail (2b) being smaller than the cross section of said inlet (1h) of said chamber (1g).

5. System according to one of Claims 1 to 3, wherein said supporting means (2b, 2e, 3d, 3e) comprise a gutter (3b) and a support (3e) for said gutter (3b), said gutter (3b) and said support (3e) being intended to be fastened to said reaction chamber (1g) in such a way as to allow said distributor (1d) to slide and be held on the axis of said inlet (1h).

6. System according to one of Claims 1 to 3, wherein said supporting means (2b, 2e, 3d, 3e) comprise a part in the shape of an arc of a circle that is intended to be fastened to the wall of said reaction chamber (1g) and to allow said distributor (1d) to be held on the axis of said inlet (1h).

7. System according to one of the preceding claims, wherein said guiding means comprise a plurality of fins (2a, 3a) that are distributed in a longitudinal direction over said tube of said distributor (1d) so as to ensure the centring of said distributor (1d) during its insertion into and/or its removal from the inlet (1h) of said chamber (1g).

8. System according to one of the preceding claims, wherein said system comprises means for installing said distributor (1d) in said chamber (1g), said installing means being intended to be disposed outside said chamber (1g) .

9. System according to Claim 8, wherein said means for installing said distributor (1d) comprise a mobile platform, the deck of which is at the height of said inlet of said chamber.

10. System according to Claim 8, wherein said installing means comprise a rail, a pulley system and a counterweight.

11. Reaction chamber (1g) comprising at least one system for a reaction chamber allowing the distribution of a liquid and/or gaseous phase according to any one of Claims 1 to 10.

12. Use of a reaction chamber comprising at least one system for a reaction chamber allowing the distribution of a liquid and/or gaseous phase according to any one of Claims 1 to 10 for an oil refining process.

13. Use according to Claim 12, wherein said refining process is a limited polymerization process.
